# EUROPÄISCHE PATENTSCHRIFT

(11) **EP 0 787 424 B1**
(45) Veröffentlichungstag und Bekanntmachung des Hinweises auf die Patenterteilung: **14.06.2000**
(21) Anmeldenummer: 97100734.9
(22) Anmeldetag: 17.01.1997
(51) Int. Cl.: A01D 43/06

(54) **Mähwerksgehäuse und Gebläse**
Mower housing and blower
Carter de tondeuse et dispositif soufflant

(30) Priorität: 02.02.1996 US 605236
(43) Veröffentlichungstag der Anmeldung: 06.08.1997
(73) Patentinhaber: DEERE & COMPANY, Moline, Illinois 61265-8098 (US)
(72) Erfinder: Bening, Curtis Reinhard, Beaver Dam, Wisconsin 53916 (US); Trefz, Harlin James, Jackson, Tennessee 38305 (US)
(74) Vertreter: Feldmann, Bernhard

(56) Entgegenhaltungen:
- FR-A- 2 732 546
- GB-A- 2 223 660
- US-A- 5 012 632
- US-A- 5 224 327
- US-A- 5 240 461
- US-A- 5 254 046

## Beschreibung

Die Erfindung bezieht sich auf ein Mähwerksgehäuse und auf ein Gebläse, das am Mähwerksgehäuse horizontal schwenkbar anschließbar ist, mit einer vom Mähwerksgehäuse aus über einen Riementrieb antreibbaren Komponente versehen ist, zwischen einer Betriebsstellung am Mähwerksgehäuse und einer zweiten vom Mähwerksgehäuse weggeschwenkten Stellung verstellbar ist und dessen Gehäuse eine von Hand verstellbare Spannscheibe zum Spannen und Entspannen eines Riemens des Riementriebes aufweist.

Eine derartige Gerätekombination ist aus dem Dokument US-A-5 240 461 bekannt. Hierbei ist normalerweise ein Mähwerk unter einem Rasentraktor aufgehängt, wobei das Mähwerk das geschnittene Gut seitlich ausbläst. Soll das Gut dann nicht auf den zuvor geschnittenen Rasen abgelegt werden, so ist es zu sammeln, beispielsweise in einem an dem Rasentraktor angebauten oder von diesem mitgeführten Container. In diesen gelangt das Gut durch ein Entleerrohr, das sich an ein Gebläse anschließt, das seinerseits an der Auswurföffnung des Mähers vorgesehen ist. In der Regel wird das zum Gebläse gehörige Gebläserad von einer Antriebsscheibe am Mähwerk aus über einen Riemen angetrieben. Der Riemen wird von der Antriebsscheibe kommend über die Spannscheibe zu einer Abtriebsscheibe am Gebläserad und über eine Umlenkscheibe zur Antriebsscheibe zurückgeführt. Auf seinem Weg wird der Riemen mehrmals um wenigstens 90° umgelenkt, wobei auch Höhenunterschiede zu überwinden sind. Die Riemenspannung wird über die Spannscheibe aufrechterhalten.

Die Spannscheibe selbst wird bei Betätigung eines Handhebels, über den eine Verriegelung für das Gebläse gelöst wird, derart verstellt, daß der Riemen nicht mehr gespannt ist und von der Antriebsscheibe abgenommen werden kann. Der Riemen muß abgenommen werden, wenn das Gebläse in seine zweite Stellung verschwenkt wird, da sich die Anlenkstelle des Gebläses an einem Ende des Gebläsegehäuses befindet und der Riemen am anderen Ende des Gebläsegehäuses in dieses geführt ist. Soll nun das Gebläsegehäuse gereinigt werden, muß zunächst der Riemen entfernt werden, damit das Gebläse in seine zweite Stellung verstellbar ist. Bei Arbeiten in nassem oder langem Gras neigen derartige Mäher leicht zu Verstopfungen, die behoben werden müssen. Hierzu ist das Gebläse ebenfalls in seine zweite Stellung zu verstellen. Ein ständiges Abbauen des Riemens ist natürlich lästig, weshalb dann Bedienungspersonen dazu tendieren, ein Entleeren in den Sammelbehälter zu unterlassen.

Die der Erfindung zugrunde liegende Aufgabe wird darin gesehen, die Kombination Mäher und Gebläse derart auszubilden, daß das Gebläse bei Verstopfungen leicht aus seiner Betriebsstellung in eine Wartungsstellung verschwenkt werden kann. Hierzu ist das Gebläse zunächst am Mähwerksgehäuse derart schwenkbar angeschlossen, daß der Riemen in der zweiten Stellung des Gebläses, die der Wartungsstellung entspricht, mit der Komponente antriebsmäßig verbunden bleibt. Er muß damit bei einem Verstellen des Gebläses aus der Betriebsstellung nicht zunächst entfernt werden. Wartungsarbeiten werden in der Regel bei stillstehendem Rasentraktor ausgeführt. Bei einigen Komfortmodellen wird dann auch automatisch der Antrieb für das Mähwerk ausgeschaltet, so daß dann als Folge auch das Gebläse nicht mehr angetrieben werden kann. Bei anderen Modellen muß das Gebläse durch Entspannen seines Antriebsriemens ausgestellt werden. Die Erfindung sieht deshalb ferner vor, daß die Spannscheibe derart schwenkbar in dem Gebläsegehäuse angeordnet ist, daß die Spannscheibe aus einer ersten Stellung in der Betriebsstellung des Gebläses bei dem Verstellen des Gebläses in dessen zweite Stellung über den Riemen in eine zweite Stellung verstellbar ist und von Hand in eine dritte Stellung. Bei einem Verstellen der Spannscheibe über den Riemen bleibt naturgemäß die Riemenspannung erhalten. In der zweiten Stellung kann damit ein Antrieb des Gebläses nur erfolgen, wenn sich das Mähwerk bei stehendem Rasentraktor nicht abstellt. Dies kann in solchen Fällen zweckmäßig sein, in denen man Mähwerk oder auch Gebläse freiblasen will. Muß aber die Verstopfung von Hand behoben werden, so ist der Riemenantrieb abzuschalten. Die Bedienungsperson braucht hierzu lediglich die Spannscheibe in ihre dritte Stellung zu verstellen, in der auch der Riemen wieder leicht von der Antriebsscheibe abgenommen werden kann. Im einzelnen ist die Spannscheibe in der zweiten Stellung des Gebläsegehäuses zwischen ihrer zweiten und dritten Stellung durch die Bewegung eines Hebelteils, der am Gebläsegehäuse vorgesehen ist, verstellbar, wobei der Riemen in der zweiten Stellung der Spannscheibe gespannt und in der dritten Stellung der Spannscheibe entspannt ist.

Vorteilhaft ist die Spannscheibe entgegen der Wirkung mindestens einer Feder aus ihrer ersten, zweiten und dritten Stellung verstellbar. Damit wird der Riemen in seiner ersten und zweiten Stellung in einfacher Weise unter Spannung gehalten und will aus seiner dritten Stellung in seine erste oder zweite Stellung zurückkehren.

Damit die Spannscheibe leicht verstellt werden kann, ist sie an dem einen Ende des Hebelteils vorgesehen, der anderenends im Gebläsegehäuse schwenkbar gelagert ist und der mit einem Schiebeteil verbunden ist, über den die Spannscheibe in ihre dritte Stellung verstellbar ist. Der Schiebeteil wird manuell betätigt und ist in der dritten Stellung der Spannscheibe feststellbar.

Nach einem weiteren Vorschlag der Erfndung ist das Gebläsegehäuse im Bereich der Spannscheibe mit einer Hülse versehen, die auf einen Tragzapfen an dem Mähwerksgehäuse aufsteckbar ist. Durch diese Maßnahme kann das Gebläse auch leicht entfernt werden, sollten die Verstopfungen ein Ausmaß annehmen, die dies erfordern.

Die dritte Stellung der Spannscheibe kann relativ nah an deren zweiten liegen, wenn mit Bezug auf die Fahrtrichtung das Gebläsegehäuse im Bereich seines rückwärtigen Endes mit dem Mähwerksgehäuse schwenkbar verbunden ist, wobei der Riemen rückwärtig dieser Schwenkverbindung verläuft.

In der Zeichnung ist ein nachfolgend näher erläutertes Ausführungsbeispiel der Erfindung dargestellt. Es zeigt:
- Fig. 1: ein an ein Mähwerksgehäuse angeschlossenes Gebläse in perspektivischer Darstellung,
- Fig. 2: eine schematische Darstellung des Gebläses in seiner Betriebsstellung mit gespanntem Antriebsriemen,
- Fig. 2a: die Lage der Drehachsen des Riementriebes in der Betriebsstellung nach Fig. 2,
- Fig. 3: das Gebläse in Seitenansicht,
- Fig. 4: eine Sicherheitsklappe,
- Fig. 5: das Gebläse in seiner Wartungsstellung,
- Fig. 5a: die Lage der Drehachsen des Riementriebes in der Wartungsstellung nach Fig. 5,
- Fig. 6: das Gebläse in Seitenansicht und in der Wartungsstellung bei gespanntem Riemen,
- Fig. 7: das Gebläse in seiner Wartungsstellung mit entspanntem Riemen,
- Fig. 7a: die Lage der Drehachsen des Riementriebes in der Stellung nach Fig.7,
- Fig. 8: das Gebläse in Seitenansicht und entspanntem Riemen,
- Fig. 9: eine Lasche mit einer schlüssellochähnlichen Öffnung zum Feststellen der Spannscheibe und
- Fig. 10: die Lasche nach Fig. 9 in Seitenansicht.

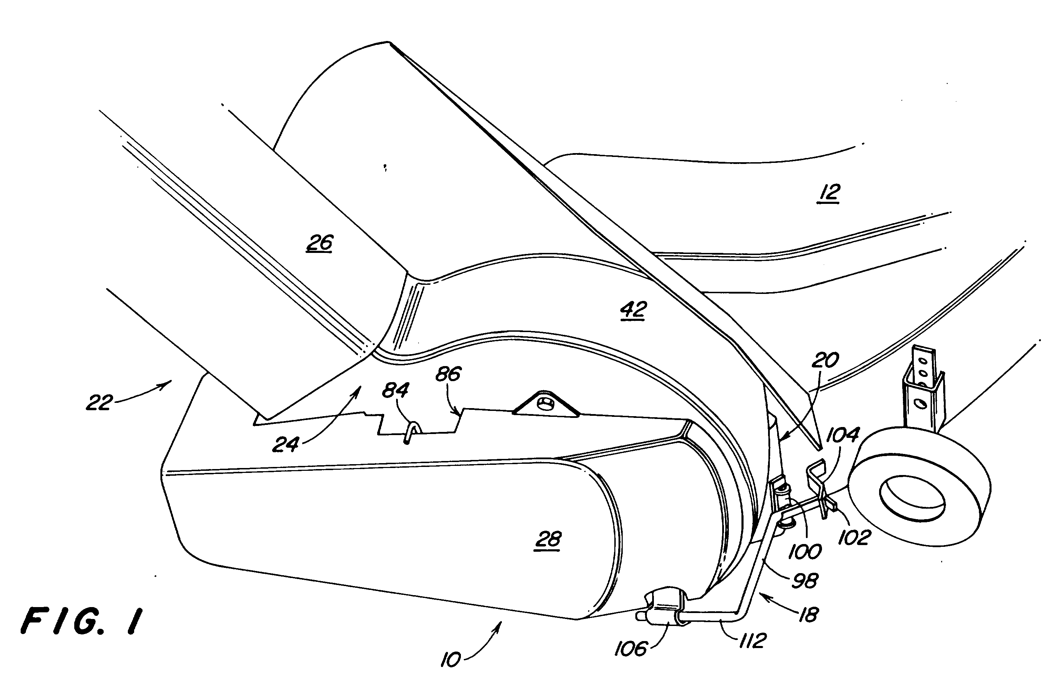

In Fig. 1 der Zeichnung ist in perspektivischer Darstellung ein schwenkbares Gebläse 10 zu erkennen, das an einem Mähwerksgehäuse 12 angeschlossen ist. Die Einlassöffnung 14 des Gebläses 10 wird mit der Auslassöffnung 16 des Mähwerksgehäuses 12 in der Betriebstellung in Deckung gebracht, wobei das Mähwerksgehäuse in typischer Weise unterhalb eines Kleintraktors oder unterhalb eines ähnlichen Fahrzeugs angebracht ist.

Das Gebläse 10 kann an das Mähwerksgehäuse 12 lösbar angeschlossen werden und weist eine Verriegelung 18 an seinem vorderen Ende 20 auf, über die das Gebläse 10 mit dem Mähwerksgehäuse 12 verriegelt werden kann. An seinem rückwärtigen Ende 22 ist das Gebläse 10 mit einem Auslass 24 versehen, an den ein Entleerrohr 26 anschließbar ist, über das von dem Gebläse 10 gefördertes Gut in einen von dem Kleinschlepper gezogenen Sammelwagen gelangen kann. Anstelle des Sammelwagens kann natürlich auch ein Sammelbehälter an die Rückseite des Traktors angeschlossen sein. Das Gebläse 10 ist an seiner Außenseite noch mit einem Deckel oder einer Verkleidung 28 ausgestattet, die zum Abdecken und zum Schutz von dort vorgesehenen Antriebskomponenten dient.

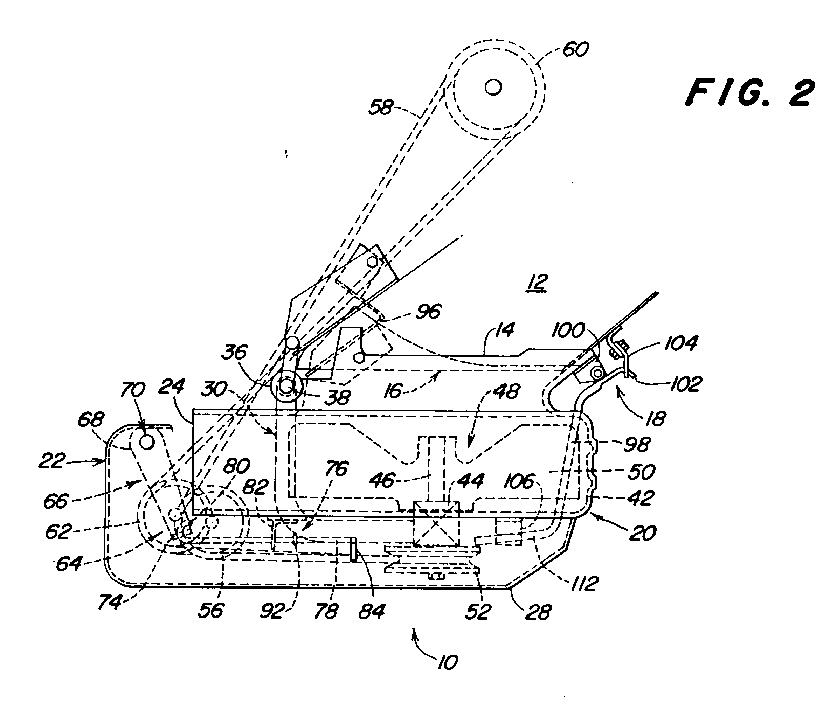

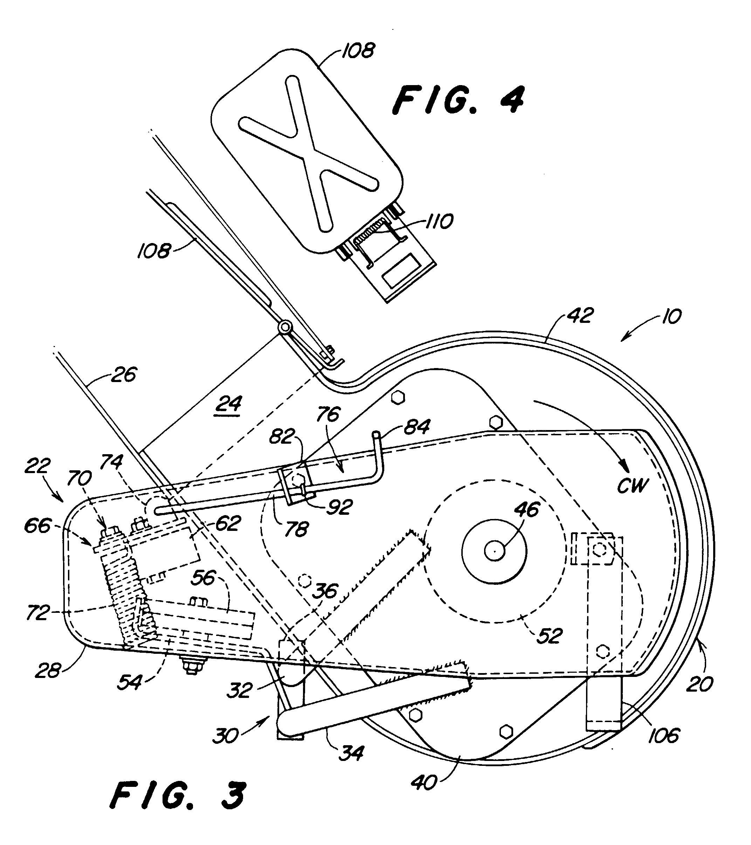

Die Fig. 2 und 3 zeigen das Gebläse schematisch von oben und von der Seite. Man erkennt dort einen zum Anschluss des Gebläses 10 an das Mähwerksgehäuse 12 dienenden Rahmenteil 30 mit zwei Tragschenkeln 32 und 34 und einer Hülse 36. Über die Hülse wird der Rahmenteil mit dem Mähwerksgehäuse schwenkbar verbunden, wozu die Hülse 36 auf einen auf dem Mähwerksgehäuse 12 vorgesehenen Tragzapfen 38 aufgesteckt wird. Der L-förmig ausgestaltete Rahmenteil 30 ist mit einer Platte 40 verbunden, beispielsweise verschweißt, die ihrerseits das vorzugsweise aus Kunststoff geformte Gebläsegehäuse 42 trägt.

Die Platte 40 trägt einen Lagerstem 44 für eine Gebläseradwelle 46, die sich bis in die Gebläseradkammer 48 erstreckt und dort ein Gebläserad 50 aufnimmt. An der anderen Seite der Platte 40 oder an der Außenseite der Gebläseradkammer ist eine Riemenscheibe 52 an dem Lagerstem 44 vorgesehen.

Aus Fig. 3 ist ferner zu erkennen, daß der Rahmenteil 30 noch mit einem Ausleger 54 versehen ist, der eine Riemenscheibe 56 trägt, die zur Richtungsänderung eines Antriebsriemens 58 dient, wenn dieser von einer Antriebsriemenscheibe 60 auf dem Mähwerksdeck kommend zu der Riemenscheibe 52 umgelenkt wird, die mit dem Gebläserad 50 antriebsmäßig verbunden ist.

Eine Spannscheibe 62 ist außerdem noch am äußeren Ende des Auslegers 54 gelagert. Die Spannscheibe 62 wird von dem einen Endteil 64 eines Hebelteils 66 aufgenommen, dessen anderer Endteil 68 mit einem Schwenkteil 70 verbunden ist, der auf dem Ausleger 54 gelagert ist. Eine Feder 72 versucht den Hebelteil mit Bezug auf Fig. 2 im Uhrzeigersinn zu drehen und damit auch die Spannscheibe in derselben Drehrichtung um die Achse des Schwenkteils 70.

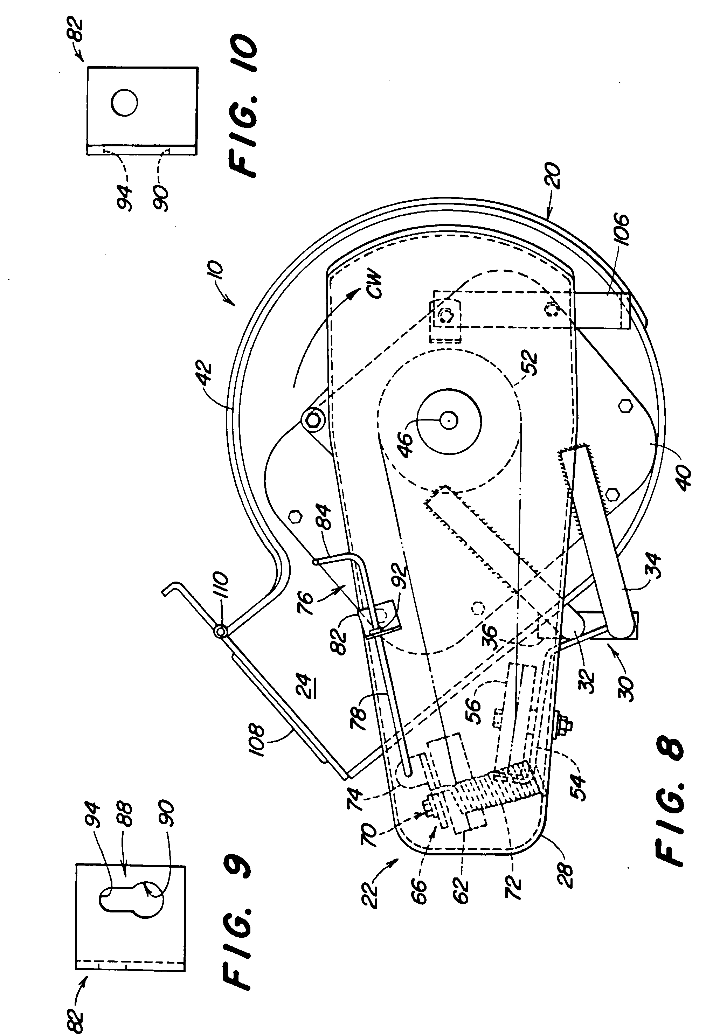

Aus Fig. 3 ist zu erkennen, daß der Hebelteil 66 an seinem Endteil 64 noch mit einer abstehenden Öse 74 versehen ist, die eine Öffnung aufweist. Ein Schiebeteil 76, zu dem eine Stange 78 gehört, ist mit einem Haken 80 versehen und mit seinem einen Ende in dieser Öffnung verankert. Der mittlere Teil der Stange 78 ist in einem Schlitz 88 in einer Lasche 82 verstellbar, die am besten aus den Fig. 9 und 10 zu ersehen ist. Die Stange 72 ist an ihrem anderen Ende mit einem nach oben abstehenden Handgriff 84 versehen, der durch eine aus Fig. 1 erkennbare Öffnung 86 in der Verkleidung 28 nach oben herausragt. Der Schlitz 88 ist schlüssellochähnlich ausgebildet und damit mit einem dünneren oberen Abschnitt 94 und einem erweiterten Abschnitt 90 ausgestattet, durch die die Stange 72 ebenfalls hindurchtreten kann. Die Stange ist noch mit einem Anschlag 92 versehen, der die Stange umgibt und einen Außendurchmesser aufweist, der größer ist als die Schlitzbreite in dem dünneren oberen Abschnitt 94. Über die Feder 72 kann der Anschlag gegen die Lasche 82 gezogen werden, deren Schlitzöffnung im unteren Bereich 90 derart ist, daß sie den Anschlag durchtreten lässt.

Aus Fig. 2 ist ferner noch zu erkennen, daß im Bereich der Auslassöffnung 16 am Mähwerksgehäuse 12 eine Leitfläche 96 angebracht ist, die einen sanften Übergang für den Gutstrom begünstigen soll, wenn der von den Messern ausgeworfene Gutstrom von der Auslassöffnung 16 am Mähwerksgehäuse 12 in die Eintrittsöffnung 14 am Gebläse eintritt.

Die am vorderen Ende 20 des Gebläses vorgesehene Verriegelung 18 besteht beim bevorzugten Ausführungsbeispiel im wesentlichen aus einer Metalstange 98. Aus den Fig. 2, 5 und 7 ist zu ersehen, daß die Stange 98 an der Stelle 100 schwenkbar mit dem Gebläsegehäuse verbunden ist und an ihrem vorderen Ende einen Hakenteil 102 aufweist, der in die Öffnung einer Öse 104 eingreifen soll, die am Mähwerksgehäuse 12 vorgesehen ist. Das andere Ende der Metalstange 98 ist lang genug und damit auch flexibel genug, um in die Fangausnehmung eines nach unten vorstehenden Fanghakens 106 gesteckt zu werden, der seinerseits am Gebläsegehäuse 42 vorgesehen ist.

An dem Gebläse 10 ist, wie aus den Fig. 3 und 4 zu erkennen ist, noch eine Sicherheitsklappe 108 vorgesehen. Die Sicherheitsklappe ist im Bereich des Auslasses 24 des Gebläses mit dessen Gehäuse schwenkbar verbunden und steht unter der Wirkung einer Feder 110, die die Klappe in eine den Auslaß verschließende Stellung verstellt, wenn das Entleerrohr nicht an das Gebläse angeschlossen ist, wie es aus der Fig. 8 zu ersehen ist. Ist das Entleerrohr 26 an das Gebläse jedoch angeschlossen, dann wird die Sicherheitsklappe durch das Entleerrohr in eine offene Stellung innerhalb des Entleerrohrs verschwenkt und gehalten.

In der Betriebsstellung des Gebläses 10 ist, wie aus Fig. 1 zu erkennen ist, das Gebläse mit dem Auslass 16 des Mähwerksgehäuses verbunden, was am vorderen Ende 20 über die Verriegelung 18 erfolgt. Der Auslass des Gebläses ist mit dem Entleerrohr verbunden, und das geschnittene Gut kann in einen Sammelbehälter gelangen.

Die Fig. 2 und 3 zeigen schematisch, wie das Gebläse im Einsatz mit dem Mähwerksgehäuse verbunden ist. Während des Einsatzes wird das durch die im Mähwerksgehäuse umlaufenden Messer geschnittene Gut durch die Auslassöffnung 16 im Mähwerksgehäuse in die Einlassöffnung 14 im Gebläse 10 geschleudert und in den Gebläseradraum 48 des Gebläses gelangen, wo es durch die Umlaufbewegung des mit Bezug auf Fig. 3 im Uhrzeigersinn umlaufenden Gebläserades 50 durch den Auslass 24 des Gebläses weiter gefördert wird. Da die Umlaufrichtung des Gebläserades im Uhrzeigersinn erfolgt, arbeiten die Gebläseradschaufeln mit dem Materialfluss und nicht gegen diesen. Ein Umleiten oder Ablenken findet nicht statt.

Der das Gebläserad 50 antreibende endlose Riemen 58 wird von der Antriebsriemenscheibe 60, die auf der Oberseite des Mähwerksgehäuses vorgesehen ist, aus angetrieben. Der Riemen 58 ist dann um die den Riemen umlenkende Riemenscheibe 56 geführt, die an dem rückwärtigen Ende 22 des Gebläses vorgesehen ist, und weiter um die Riemenscheibe 52 am Gebläserad und zurück und um die Spannscheibe 62 bis schließlich zur Antriebsriemenscheibe.

Die für den Antrieb des Gebläserades erforderliche Riemenspannung wird durch die Spannscheibe 62 erzeugt, die mit Bezug auf die Fig. 2, 5 und 7 über die Feder 66 im Uhrzeigersinn um ihre Drehachse oder ihren Schwenkteil 64 drehen will. Im betrieblichen Einsatz und bei gespanntem Riemen befindet sich die Stange 72 in dem unteren und größeren Lochbereich 90 des Schlitzes 88 in der Lasche 82, wobei, wie aus Fig. 2 und 3 zu ersehen ist, der Anschlag 92 sich an einer Seite des Schlitzes 88 befindet.

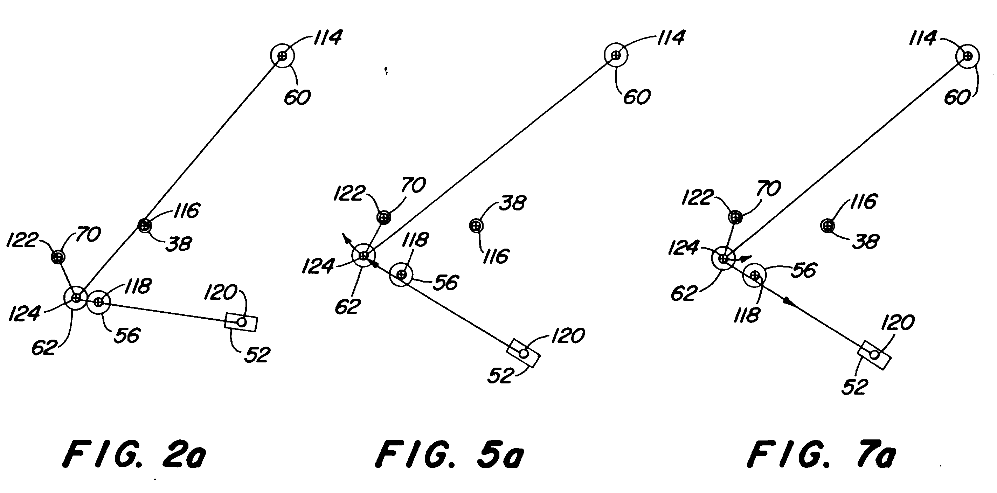

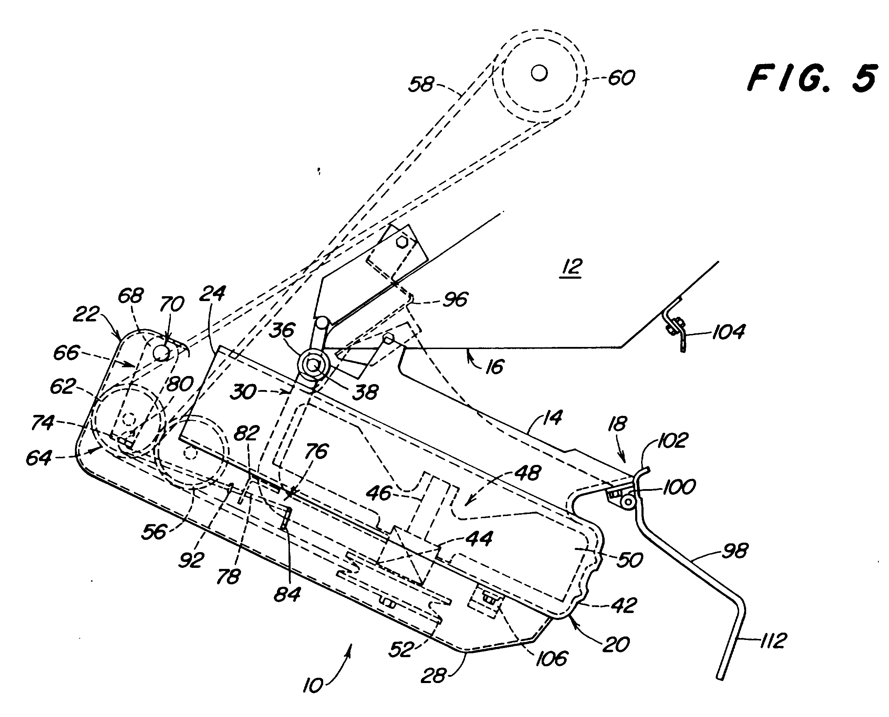

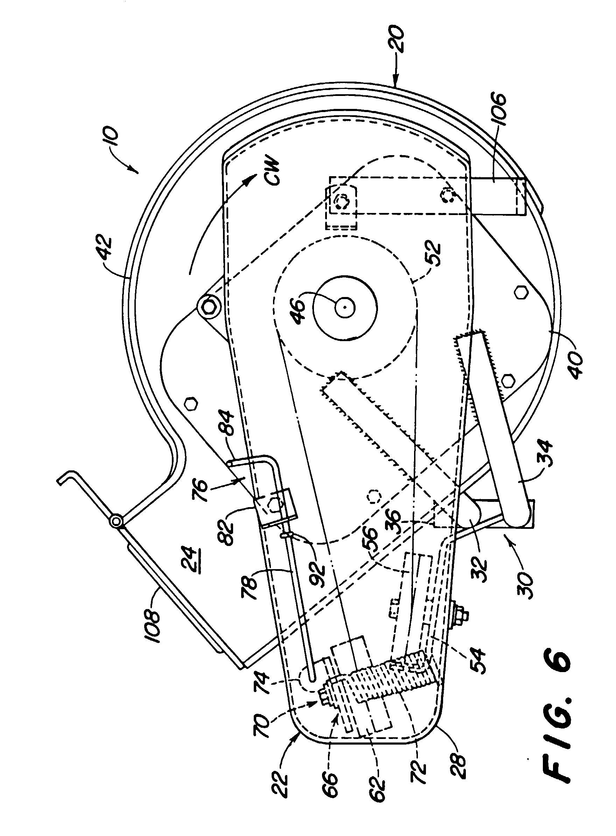

Sollte nun der Rasenmäher in seinem Einsatz auf nasses oder zu langes Gras treffen oder andere Bedingungen vorfinden, die eine Verstopfung verursachen oder den Gutfluss durch das Gebläse 10 behindern, so muss die Bedienungsperson den Kleintraktor zum Reinigen des Gebläses zunächst anhalten und den Antrieb zu dem Gebläse unterbrechen. Aus Sicherheitsgründen ist auch der Antrieb zu dem Mähwerk zu unterbrechen. Danach kann die Bedienungsperson das Gebläse in eine offene oder für die Bedienungsperson zugängliche Stellung, wie sie aus den Fig. 5 und 6 zu erkennen ist, verschwenken. Um dies tun zu können, löst die Bedienungsperson zunächst den Handgriff 112 der Metalstange 98 von dem Fanghaken 106, indem sie den Handgriff nach innen gegen das Gehäuse 42 und dann nach unten drückt. Wenn die Metallstange aus ihrer Stellung in Fig. 2 in ihre Stellung nach Fig. 5 verstellt wird, tritt auch der Hakenteil 102 am anderen Ende der Metallstange aus der Öffnung in der Öse 104 am Mähwerksgehäuse 12 aus. Das vordere Ende 20 des Gebläses 10 kann dann um die Achse des Tragzapfens 38 nach außen verschwenkt werden, in der das Innere der Gebläsekammer 96 des Gebläses oder der Auslaß16 des Mähwerksgehäuses gut zugänglich sind.

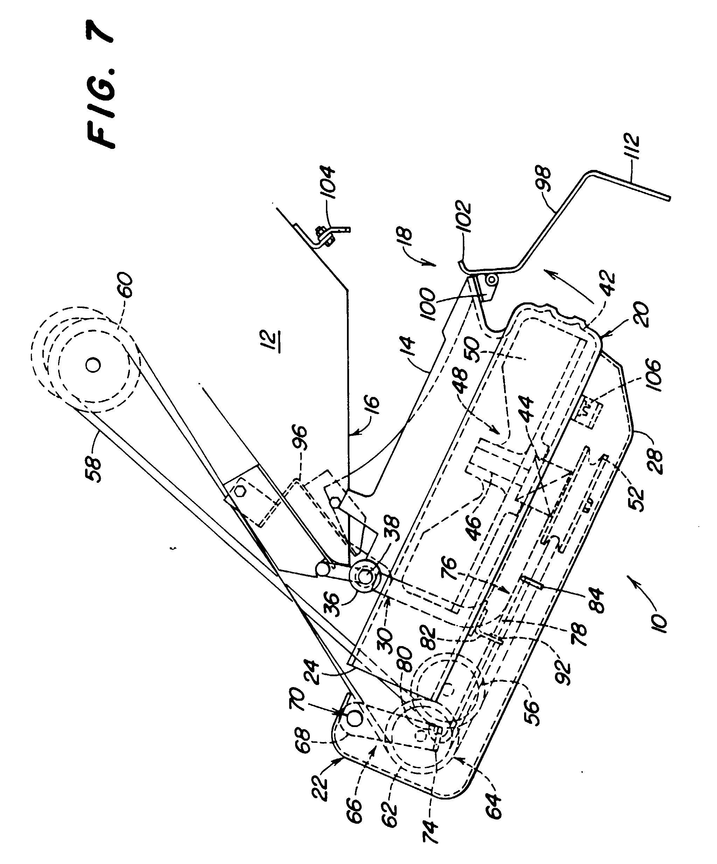

Ist der Mäher mit einer Vorrichtung ausgestattet, die bei einem Absteigen der Bedienungsperson vom Kleinschlepper sicherstellt, daß der Antrieb zur Antriebsscheibe 60 auf dem Mähwerksgehäuse ausgeschaltet wird, so ist es nicht erforderlich, daß die Bedienungsperson für die Reinigungsarbeiten den Riemen entspannt. In solchen Fällen wird dann der Riemen und die Spannscheibe die in den Fig. 5 und 6 gezeigten Stellungen einnehmen. Will die Bedienungsperson auch noch für die Reinigungsarbeiten den Antriebsriemen entspannen, so verstellt sie die Stange 78 aus der großen Schlitzöffnung 90 in den schmaleren oberen Teil 94 des Schlitzes 88 in der Lasche 82. Beim Öffnen des Gebläses wird, da die Stange 72 mit dem Hebelteil 66, der infolge der Federwirkung im Uhrzeigersinn drehen will, verbunden ist, die Feder 72 den Anschlag 92 auf der Stange gegen die Lasche 82 ziehen, wie es in den Fig. 7 und 8 gezeigt ist. Die Stange 78 verbleibt in der Stellung nach Fig. 7 infolge der durch die Feder hervorgerufenen festen Anlage des Anschlages gegen die Lasche, so daß beim Öffnen des Gebläses der Riemen spannungslos wird. Andererseits ist es aber auch möglich, daß die Bedienungsperson eventuell nach dem Öffnen des Gebläses den Riemen entspannen möchte. Hierzu kann sie die Stange 78 aus ihrer Stellung nach Fig. 6 in ihre Stellung nach Fig. 8 verstellen, indem sie den Handgriff 84 nach vorne zieht, wobei der Anschlag 84 durch die große Schlitzöffnung 90 in der Lasche 82 durchtritt. Danach wird die Stange in den oberen und schmaleren Abschnitt 94 des Schlitzes 88 verstelllt, wonach die auf den Hebelteil wirkende Feder 72 den Anschlag 92 gegen die Lasche zur Anlage ziehen kann.

In den Fig. 2a, 5a und 7a sind die Positionen der Achsen der Antriebsscheibe 60, der Richtungsscheibe 56, der Riemenscheibe 52 für das Gebläserad, der Spannscheibe 62, des Schwenkteils 70 und die Achse des Tragzapfens 38 für den Anschluß des Gebläses für die Stellungen eingezeichnet, die die entsprechenden Teile in den Fig. 2, 5 und 7 einnehmen. Die Fig. 2a, 5a und 7a sollen die Stellungen verdeutlichen, die die verschiedenen Komponenten bei geschlossenem Gebläse und bei weggeschwenktem Gebläse einnehmen, wobei der Riemen einmal gespannt bleibt und zum anderen entspannt ist. In den Fig. 2a, 5a und 7a bezeichnet 114 die Drehachse der Antriebsscheibe 60, 116 die Drehachse des Gebläses bzw. die Achse des Tragzapfens 38, 118 die Drehachse der Richtungsscheibe 56, 120 die Drehachse der Riemenscheibe 52 an dem Gebläserad, 122 die Drehachse für den Schwenkteil 70 und 124 die Drehachse für die Spannscheibe 62.

Wie aus den Fig. 2a, 5a und 7a ersichtlich ist, hängt die Riemenspannung von der relativen Lage der Spannscheibe 62 mit Bezug auf die Antriebsscheibe 60 und die Riemenscheibe 52 für das Gebläserad ab, wobei der Riemen in der Stellung der Fig. 2a gespannt ist, in der geöffneten Stellung nach Fig. 5a gespannt bleibt und in der geöffneten Stellung nach Fig. 7a entspannt ist.

Im einzelnen nimmt in Fig. 2a die Drehachse 124 mit Bezug auf die Achse 122 die 5-Uhr-Stellung ein, in der der Riemen 58 gespannt und das Gebläse in seiner geschlossenen Betriebsstellung ist. Befindet sich das Gebläse in seiner geöffneten Wartungs- oder Reinigungsstellung, dann nehmen die einzelnen Achsen die Stellungen nach Fig. 5a bzw. 7a ein. Aus Fig. 5a ist zu erkennen, daß die Drehachse 124 der Spannscheibe 62 durch die Feder 72 in die 7-Uhr-Stellung verstellt wurde, in der sie von den Achsen 114 und 120 weiter entfernt ist und in der die Riemenspannung erhalten bleibt.

Will aber die Bedienungsperson den Riemen bei sich in der Wartungsstellung befindlichem Gebläse entspannen, dann kann sie manuell die Achse 124 der Spannscheibe 62 etwa in die in Fig. 7a gezeigte 6.30-Uhr-Stellung verstellen. Sie betätigt hierzu den Schiebeteil 76, wobei der Hebelteil 66 entsprechend verstellt wird. In der Position nach Fig. 7a befindet sich die Achse 124 näher an den Achsen 120 und 114, wodurch der Riemen entspannt ist und entfernt werden kann. Ist der Riemen entfernt, kann natürlich auch das Gebläse leicht abgenommen werden.

Aus dem Vorstehenden ergibt sich somit, daß sich die Kombination von Gebläse und Mähwerk auch bei langem oder nassem Gras einsetzen lässt, wo öfters Verstopfungen zu befürchten sind. Die Leitfläche ermöglicht einen glatten Übergang zwischen Mähwerksgehäuse und Gebläse, also an Stellen, wo sich normalerweise vorspringende Teile befinden, so daß Gutansammlungen hier nicht zu befürchten sind. Die Drehrichtung des Gebläserades ist derart, daß die Bewegung des aus dem Auslass im Mähwerksgehäuse austretenden Gutes positiv beeinflusst wird. Da das Gebläse mit dem Mähwerksgehäuse an seinem rückwärtigen linken Ende horizontal schwenkbar verbunden ist und an seinem vorderen Ende über einen Schnellverschluß mit dem Mähwerksgehäuse verriegelbar ist, lässt es sich bei Verstopfungen zu Reinigungszwecken leicht öffnen. Der Antriebsriemen ist leicht zu entspannen und kann, falls dies gewünscht wird, auch dann leicht entfernt werden. Entsprechendes gilt auch für den Abbau des gesamten Gebläses, da dieses lediglich auf den Tragzapfen 38 aufgesteckt ist. Die Riemenführung ist derart gestaltet, daß sich der Riemen und die Drehachse des Gebläses nicht behindern, wenn das Gebläse in seine Wartungsstellung verschwenkt wird.

## Patentansprüche

1. Mähwerksgehäuse und Gebläse, das am Mähwerksgehäuse (12) horizontal schwenkbar anschließbar ist, mit einer vom Mähwerksgehäuse (12) aus über einen Riementrieb antreibbaren Komponente versehen ist, zwischen einer Betriebsstellung am Mähwerksgehäuse (12) und einer zweiten vom Mähwerksgehäuse (12) weggeschwenkten Stellung verstellbar ist und dessen Gehäuse (42) eine von Hand verstellbare Spannscheibe (62) zum Spannen und Entspannen eines Riemens (58) des Riementriebes aufweist, dadurch gekennzeichnet, daß das Gebläse (10) am Mähwerksgehäuse (12) derart schwenkbar angeschlossen ist, daß der Riemen (58) in der zweiten Stellung mit der Komponente antriebsmäßig verbunden ist, und daß die Spannscheibe (62) derart schwenkbar in dem Gebläsegehäuse (42) angeordnet ist, daß die Spannscheibe (62) aus einer ersten Stellung in der Betriebsstellung des Gebläses bei dem Verstellen des Gebläses (10) in dessen zweite Stellung über den Riemen (58) in eine zweite Stellung verstellbar ist und von Hand in eine dritte Stellung.

2. Kombination nach Anspruch 1, dadurch gekennzeichnet, daß die Spannscheibe (62) in der zweiten Stellung des Gebläsegehäuses (42) zwischen ihrer zweiten und dritten Stellung durch die Bewegung eines Hebelteils (66), der am Gebläsegehäuse (42) vorgesehen ist, verstellbar ist, wobei der Riemen (58) in der zweiten Stellung der Spannscheibe (62) gespannt und in der dritten Stellung der Spannscheibe (62) entspannt ist.

3. Kombination nach Anspruch 1 oder 2, dadurch gekennzeichnet, daß die Spannscheibe (62) entgegen der Wirkung mindestens einer Feder (72) aus ihrer ersten, zweiten und dritten Stellung verstellbar ist.

4. Kombination nach Anspruch 2, dadurch gekennzeichnet, daß die Spannscheibe (62) an dem einen Ende des Hebelteils (66) vorgesehen ist, der anderenends im Gebläsegehäuse (42) schwenkbar gelagert ist und der mit einem Schiebeteil (76) verbunden ist, über den die Spannscheibe (62) in ihre dritte Stellung verstellbar ist.

5. Kombination nach Anspruch 1, dadurch gekennzeichnet, daß das Gebläsegehäuse (42) im Bereich der Spannscheibe (62) mit einer Hülse (36) versehen ist, die auf einen Tragzapfen (38) an dem Mähwerksgehäuse (12) aufsteckbar ist.

6. Kombination nach Anspruch 4, dadurch gekennzeichnet, daß der Schiebeteil (76) in der dritten Stellung der Spannscheibe (62) feststellbar ist.

7. Kombination nach einem oder mehreren der vorstehenden Ansprüche, dadurch gekennzeichnet, daß mit Bezug auf die Fahrtrichtung das Gebläsegehäuse (42) im Bereich seines rückwärtigen Endes mit dem Mähwerksgehäuse schwenkbar verbunden ist, wobei der Riemen (58) rückwärtig dieser Schwenkverbindung verläuft.

## Claims

1. A mower housing and blower, which can be attached to the mower housing (12) to swing horizontally, is provided with components which can be driven from the mower housing (12) by a belt drive, can be moved between an operating position on the mower housing (12) and a second position swung away from the mower housing (12), and whose housing (42) comprises a manually adjustable tensioning pulley (62) for tensioning and slackening a belt (58) of the belt drive, characterized in that the blower (10) is so attached pivotally to the mower housing (12) that the belt (58) is in driving connection with the components in the second position, and in that the tensioning pulley (62) is so arranged pivotally in the blower housing (42) that the tensioning pulley (62) can be shifted by the belt (58) out of a first position in the operating position of the blower into a second position on moving the blower (10) into its second position and manually into a third position.

2. A combination according to claim 1, characterized in that the tensioning pulley (62) can be moved in the second position of the blower housing (42) between its second and third positions by movement of a lever part (66) which is provided on the blower housing (42), wherein the belt (58) is tensioned in the second position of the tensioning pulley (62) and is slackened in the third position of the tensioning pulley (62).

3. A combination according to claim 1 or 2, characterized in that the tensioning pulley (62) is movable out of its first, second and third positions against the action of at least one spring (72).

4. A combination according to claim 2, characterized in that the tensioning pulley (62) is provided on the one end of the lever part (66), which is pivotally mounted at the other end in the blower housing (42) and is connected to a slider part (76), through which the tensioning pulley (62) can be moved into its third position.

5. A combination according to claim 1, characterized in that the blower housing (42) is provided in the region of the tensioning pulley (62) with a sleeve (36), which can be pushed on to a support pin (38) on the mower housing (12).

6. A combination according to claim 4, characterized in that the slider part (76) can be fixed in the third position of the tensioning pulley (62).

7. A combination according to one or more of the preceding claims, characterized in that the blower housing (42) is pivotally connected to the mower housing in the region of its rear end, relative to the direction of travel, while the belt (58) runs to the rear of this pivotal connection.

## Revendications

1. Carter d'unité de coupe et soufflante, qui peut être raccordée, de manière à pouvoir pivoter horizontalement, au carter (12) de l'unité de coupe, est équipée d'un composant pouvant être entraîné à partir du carter (12) de l'unité de coupe par l'intermédiaire d'un dispositif d'entraînement à courroie, est déplaçable entre une position de fonctionnement au carter (12) de l'unité de coupe et une seconde position écartée, par pivotement, du carter (12) de l'unité de coupe et dont le carter (42) comporte une poulie de tension (62) réglable manuellement, qui sert à tendre et détendre une courroie (58) du dispositif d'entraînement à courroie, caractérisé en ce que la soufflante (10) est raccordée de manière à pouvoir pivoter au carter (12) de l'unité de coupe, que dans la seconde position, la courroie (58) est reliée au composant selon une liaison motrice et que la poulie de tension (62) est disposée de manière à pouvoir pivoter dans le carter (42) de la soufflante de telle sorte que la poulie de tension (62) peut être déplacée depuis une première position lorsque la soufflante est dans la position de fonctionnement, dans une seconde position lors du déplacement de la soufflante (10) amenant cette dernière dans sa seconde position, par l'intermédiaire de la courroie (58), et peut être amenée manuellement dans une troisième position.

2. Combinaison selon la revendication 1, caractérisée en ce que lorsque le carter (42) de la soufflante est dans la seconde position, la poulie de tension (62) est déplaçable entre ses seconde et troisième position sous l'effet du déplacement d'une partie formant levier (66), qui est prévue sur le carter (42) de la soufflante, la courroie (58) étant tendue lorsque la poulie de tension (62) est dans la seconde position et étant détendue lorsque la poulie de tension (62) est dans la troisième position.

3. Combinaison selon la revendication 1 ou 2, caractérisée en ce que la poulie de tension (62) est déplaçable à l'encontre de l'action d'au moins un ressort (72) à partir de sa première, de sa seconde et de sa troisième position.

4. Combinaison selon la revendication 2, caractérisée en ce que la poulie de tension (62) est prévue sur une extrémité de la partie formant levier (66) qui est montée, à son autre extrémité, de manière à pouvoir pivoter dans le carter (42) de la soufflante et qui est reliée à une partie coulissante (76) au moyen de laquelle la poulie de tension (62) peut être amenée dans sa troisième position.

5. Combinaison selon la revendication 1, caractérisée en ce que le carter (42) de la soufflante comporte, au voisinage de la poulie de tension (62), une douille (36), qui peut être emmanchée sur un téton de support (38) situé sur le carter (12) de l'unité de coupe.

6. Combinaison selon la revendication 4, caractérisée en ce que la partie coulissante (76) peut être bloquée lorsque la poulie de tension (62) est dans sa troisième position.

7. Combinaison selon une ou plusieurs des revendications précédentes, caractérisée en ce que par rapport à la direction de course, le carter (42) de la soufflante est relié de façon à pouvoir pivoter, dans la zone dé son extrémité arrière, au carter de l'unité de coupe, la courroie (58) s'étendant en arrière de cette liaison pivotante.
